# EUROPEAN PATENT APPLICATION

(11) **EP 4 822 639 A1**
(43) Date of publication of application: **14.10.2026**
(21) Application number: 25169807.2
(22) Date of filing: 10.04.2025
(51) Int. Cl.: G06T 7/00, G06T 7/50

(54) **MOBILE THREE-DIMENSIONAL OBJECT RECOGNITION**

(71) Applicant: ROONIQ GmbH, 53797 Lohmar (DE)
(72) Inventor: Dehlin, Carl Gustav William, 118 47 Stockholm (SE); Wood, Samuel David Stanley, CAMBS, PE29 6XT (GB); Bell, Duncan Whitworth, 53797 Lohmar (DE)
(74) Representative: Grünecker Patent- und Rechtsanwälte PartG mbB

(57) **Abstract**

The present disclosure relates to object recognition, which may be applied in identifying, measuring, and/or counting items. In particular, the present disclosure relates to methods and apparatuses measuring, with a ranging sensor of a hand-held device, depth information of a scene comprising an object; capturing, with an image sensor of the hand-held device, an image of the scene comprising the object; and recognizing the object within the scene, wherein the recognizing includes matching the depth information and the image with a three-dimensional, 3D, template of said object.

## Description

The present disclosure relates to object recognition for item identification, measurement, and/or counting. In particular, the present disclosure relates to methods and apparatuses for such object recognition.

### BACKGROUND

Manual methods of identifying, measuring, counting, and comparing objects are highly susceptible to data entry errors due to the reliance on human input, which can be inconsistent and prone to mistakes. Factors such as fatigue, distraction, misinterpretation of measurements, and typographical errors can result in inaccurate or incomplete data. In addition, manual methods often require multiple steps and interactions, increasing the likelihood of transcription errors when transferring data from one medium to another. These errors can accumulate, leading to flawed analysis, inefficiencies, and unreliable results, particularly in large-scale or complex projects.

It is desirable to provide automated methods for object recognition in order to facilitate item identification, measuring and/or counting.

### SUMMARY

Methods and techniques are described herein for facilitating recognition of objects in a scene. In particular, mobile depth data is used to identify, measure and compare real world objects with a template.

The invention is defined by the independent claims. Some exemplary implementations are provided by the dependent claims.

For example, a method for object recognition, comprising: measuring, with a ranging sensor of a hand-held device, depth information of a scene comprising an object; capturing, with an image sensor of the hand-held device, an image of the scene comprising the object; and recognizing the object within the scene, wherein the recognizing includes matching the depth information and the image with a three-dimensional, 3D, template of said object.

For example, s hand-held device is provided for object recognition, comprising: a ranging sensor for measuring depth information of a scene comprising an object; an image sensor for capturing an image of the scene comprising the object; and processing circuitry configured to recognize the object within the scene, wherein the recognition includes matching the depth information and the image with a three-dimensional, 3D, template of said object.

Further methods, apparatuses, and programs are provided as is described herein.

These and other features and characteristics of the presently disclosed subject matter, as well as the methods of operation and functions of the related elements of structures and the combination of parts and economies of manufacture, will become more apparent upon consideration of the following description and the appended claims with reference to the accompanying drawings, all of which form a part of this specification. It is to be expressly understood, however, that the drawings are for the purpose of illustration and description only and are not intended as a definition of the limits of the disclosed subject matter. As used in the specification and the claims, the singular form of "a," "an," and "the" include plural referents unless the context clearly dictates otherwise.

### BRIEF DESCRIPTION OF DRAWINGS

An understanding of the nature and advantages of various embodiments may be realized by reference to the following figures.
- FIG. 1: is a flow diagram illustrating an exemplary method for identifying items by means of object recognition.
- FIG. 2: is a block diagram illustrating a structure of an exemplary apparatus such as a hand-held apparatus for performing the object recognition.
- FIG. 3: is a flow diagram illustrating an exemplary method for the object recognition.
- FIG. 4: is a photograph of an exemplary hand-held device displaying a resulting screen including identified items.
- FIG. 5: is a photograph of an exemplary storage with stacked items.
- FIG. 6: is a photograph of an exemplary storage with items on a pallet.
- FIG. 7: is a photograph of an exemplary storage with items in a metal drawer.

Like reference numbers and symbols in the various figures indicate like elements, in accordance with certain example implementations.

### DESCRIPTION OF EXEMPLARY EMBODIMENTS

For purposes of the description hereinafter, the terms "end," "upper," "lower," "right," "left," "vertical," "horizontal," "top," "bottom," "lateral," "longitudinal," and derivatives thereof shall relate to the disclosed subject matter as it is oriented in the drawing figures. However, it is to be understood that the disclosed subject matter may assume various alternative variations and step sequences, except where expressly specified to the contrary. It is also to be understood that the specific devices and processes illustrated in the attached drawings, and described in the following specification, are simply exemplary embodiments or aspects of the disclosed subject matter. Hence, specific dimensions and other physical characteristics related to the embodiments or aspects disclosed herein are not to be considered as limiting unless otherwise indicated.

No aspect, component, element, structure, act, step, function, instruction, and/or the like used herein should be construed as critical or essential unless explicitly described as such. Also, as used herein, the articles "a" and "an" are intended to include one or more items and may be used interchangeably with "one or more" and "at least one." Furthermore, as used herein, the term "set" is intended to include one or more items (e.g., related items, unrelated items, a combination of related and unrelated items, and/or the like) and may be used interchangeably with "one or more" or "at least one." Where only one item is intended, the term "one" or similar language is used. Also, as used herein, the terms "has," "have," "having," or the like are intended to be open-ended terms. Further, the phrase "based on" is intended to mean "based at least partially on" unless explicitly stated otherwise.

Embodiments of the present disclosure provide methods and devices suitable for detecting, aligning, identifying, measuring and comparing 3D models and data captured by a mobile device. A digitized solution is advantageous as it automates the processes of identifying, measuring, counting, and comparing objects using advanced algorithms, sensors, and real-time data analysis, effectively eliminating human error. By leveraging computer vision and depth data, the software can precisely capture and process object information without the need for manual input, reducing the risk of inaccuracies caused by transcription error, fatigue or misinterpretation. This automated approach ensures consistent and reliable data, enhances efficiency by speeding up the process, and improves scalability for large or complex tasks, all while providing real-time validation and minimizing the need for repetitive manual steps.

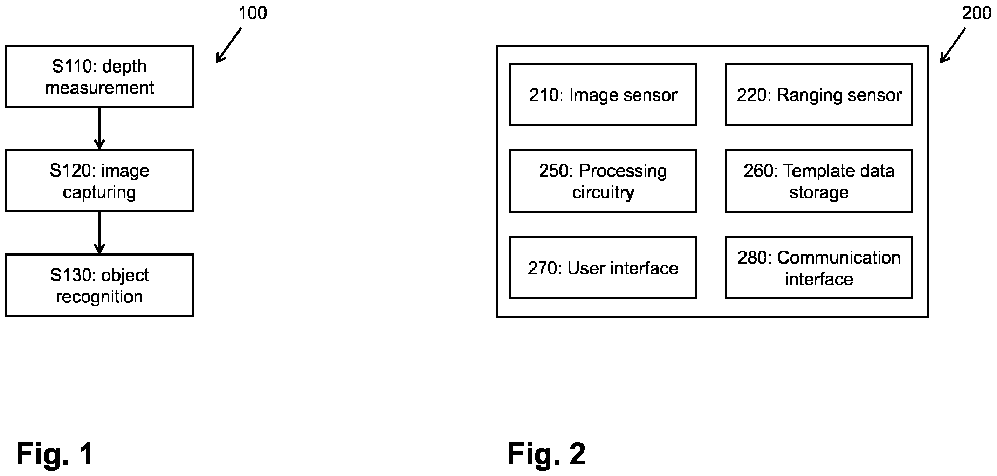

Fig. 1 illustrates an exemplary method 100 for object recognition. The method 100 comprises a step of measuring S110 depth information of a scene comprising an object. The scene may comprise one or more objects. The depth information is measured, for example, with a ranging sensor of a hand-held device.

The method 100 further comprises a step of capturing S120 an image of the scene comprising the object. The image capturing is performed with an image sensor of the hand-held device.

The method 100 further comprises a step of recognizing S130 the object within the scene. The recognizing includes matching the depth information and the image with a three-dimensional, 3D, template of said object.

In other words, the hand-held device captures the same scene with a ranging sensor and an image sensor and detects one or more objects in the scene based on a pre-defined object template. It is noted that the scene may be captured by the two sensors of the hand-held device simultaneously or within some delay so that the scene remains substantially unchanged. For instance, such delay may be in practical systems several milliseconds or even seconds, depending on specific application.

The 3D template in step S130 may be any kind of 3D object description. One example may be CAD data. CAD data refers to the digital files created using Computer-Aided Design (CAD) software. These files contain information about the design of objects, including their geometry. The CAD data may further include characteristics such as dimensions, materials, and/or other properties of the object. CAD data have been used to describe 3D models (templates) of objects. The 3D template may be stored in the hand-held device or in an external storage accessible by the hand-held device (e.g. in a cloud or in a server or the like). For instance, 3D templates of objects that are expected to be recognized in the scene may be stored and used by the hand-held device for comparing them with the captured/measured sensor data.

A hand-held device is a portable electronic device that can be held and operated with one or both hands. Some common examples of hand-held devices include specialized hand-held devices designed for specific purposes or generic hand-held devices such as smartphones, tablets, mobile consoles or the like. The present disclosure is not limited to any specific kind of hand-held device.

A ranging sensor is a sensor used to measure a distance (also referred to as range) between the sensor and an object. The term object refers to any kind of object including walls, floors, things such as various boxes, packages, goods, or the like. The present disclosure is not limited to any specific ranging sensor. There are several types of ranging sensors that may be used. For example, LIDAR (Light Detection and Ranging) sensors may use laser light to create a 3D map of an environment (e.g. of the scene). Other ranging sensors include ultrasonic sensors, infrared sensors, radar, Time-of-Flight (ToF) Sensors, structured lightnting, multiple view geometry (stereo depth, photometry), machine learning based methods such as true depth monocular depth estimation or the like.

An image sensor is a sensor that converts light into electrical signals to create digital images. The present disclosure is not limited to any specific image sensor and may use commercially available image sensors or camera modules including sensors such as Charge-Coupled Device (CCD) Sensors or Complementary Metal-Oxide-Semiconductor (CMOS) Sensors or the like.

An embodiment of the present disclosure provides a device (apparatus) capable of performing steps of the method illustrated in Fig. 1. An example of such device 200 is shown in Fig. 2. The device 200 is a hand-held device for object recognition. The device 200 comprises a ranging sensor 220 for measuring depth information of a scene comprising an object and an image sensor 210 for capturing an image of the scene comprising the object.

The hand-held device 200 further comprises processing circuitry 250 configured to recognize the object within the scene. As described above with reference to method 100, the recognition includes matching the depth information and the image with a 3D template of the object.

The processing circuitry 250 may be any combination of a hardware and software. For a hardware part of implementation, any processing circuitry may be used, which may include one or more processors. For example, the hardware may include one or more of application specific integrated circuits (ASICs), digital signal processors (DSPs), digital signal processing devices (DSPDs), programmable logic devices (PLDs), field programmable gate arrays (FPGAs), Graphics Processing Units (GPUs), Neural Processing Unit (NPUs), processors, controllers, any electronic devices, or other electronic circuitry units or electronic elements designed to perform the functions described above. The processing circuitry 250 may be provided as an integrated circuit (IC) integrating the functions of the processing circuitry.

The processing circuitry 250 may further include inputs and/or outputs that interface the sensor(s) 210 and 220, a storage 260, a user interface 270, and/or a communication interface 280. Such inputs and/or outputs enable the processing circuitry 250 to exchange data with the other components of the hand-held device or with one or more external devices. For instance, the processing circuitry 250 may control, over its output the ranging sensor 220 and the image sensor 210 to provide measured or captured data to the processing circuitry 250 over its input.

The hand-held device 250 may further include the storage 260, which may be any volatile or non-volatile storage. The storage may be used to store the 3D template and/or a program to be rung on one or more processors of the processing circuitry 250.

The hand-held device 250 may further include the user interface 270. The user interface 270 may be any user interface enabling for input and/or output. For example, the user input may be enabled by means of a touch screen or by means of a keyboard or one or more physical buttons or the like. The user output may be a screen (display), and/or light indicators and/or speaker or the like.

The hand-held device 250 may further include the communication interface 280. The communication interface 280 may be for instance a WiFi interface and/or mobile cellular system interface or any other wired (e.g. USB) or wireless interface.

However, it is noted that the present disclosure is not limited to include all modules shown in Fig. 2. Rather the modules such as the storage 260, the user interface, and/or the communication interface 280 may be in part or completely external to the hand-held device. In such a case, the hand-held device 200 may have the corresponding interface(s) for communication with one or more of these modules. It is conceivable that one or both sensors (210, 220) may be also external, i.e. connectable to the hand-held device over a standardized or proprietary communication interface.

The above described method 100 and device 200 provide an advantage of combined 2D imaging and ranging sensing with a pre-defined 3D template. For example, geometry errors can be found that are not visible in the 2D color space, under any lighting conditions and without any training data. This is distinct from production line based computer vision, where the lighting, position and throughput of the products is tightly controlled. With the above mentioned approach, the hand-held device is designed to be taken to the objects to be recognized, wherever they may be. The hand-held device may be carried by humans or even by mobile robots. Thus, the present disclosure may be applied in industrial environments for recognizing products out of a predefined set of products with available 3D templates. The recent introduction of LiDAR range sensors into off-shelf devices such as smartphones or tablets may offer several advantages over traditional 2D computer vision, primarily due to the ability to capture and process depth information in addition to color and texture. This, in turn, may allow to count, identify, measure, and/or compare objects to CAD data (template) stored on the device or in the cloud.

The depth Information provided by the ranging sensor in addition to the 2D image provides for 3D computer vision with depth perception, enabling the recognizing algorithm to understand the absolute distances between objects in a scene. This depth information is beneficial for tasks such as object recognition, scene reconstruction, and augmented reality applications, making them more accurate and robust.

Enhanced Object Recognition is possible with usage of the depth information: the 3D computer vision can distinguish between objects that have similar 2D appearances. This makes it more reliable in scenarios where objects may partially overlap or have similar textures but different depths, such as in robotics and industrial automation.

Improved tracking and localization may be achieved: 3D vision may aid in precise tracking and localization of objects in a 3D environment, which is of benefit for applications like robotics navigation, object tracking in augmented reality, and indoor positioning systems. Environment understanding may also be improved, since 3D vision can create a more comprehensive understanding of a scene or environment, allowing for better interpretation of complex spatial relationships.

3D scene reconstruction may be also improved, as the 3D computer vision can create accurate 3D models of real-world scenes, which may be advantageous for applications in archaeology, architecture, cultural heritage preservation, and virtual reality content creation. Furthermore, augmented and virtual reality may be improved, as the 3D computer vision may enhance the quality and realism of augmented reality experiences by allowing virtual objects to interact more seamlessly with the real world, thanks to precise depth information.

In the context of industrial application, improved Quality Control and Inspection may be achieved. Specifically, in industrial settings, 3D vision systems can inspect and measure objects more accurately, detect defects in 3D space, and improve quality control processes in manufacturing. Further areas of application include Industrial Automation, Robotics, Retail & Ecommerce, Environmental Monitoring, Education, and/or Design and Architecture.

As mentioned above, the present disclosure may be implemented in a software that is run on a standard hand-held device including both an imaging and ranging sensors. Such software utilizes depth data from consumer mobile devices to analyse the real world in 3D, enabling object identification, measurement, and comparison. This may be achieved by providing a computer vision (CV) library that detects and measures physical items visible to it in the input data. Input data consists of a color image and the corresponding depth data, which are obtained from a host system. The library functions are exemplified in more detail below.

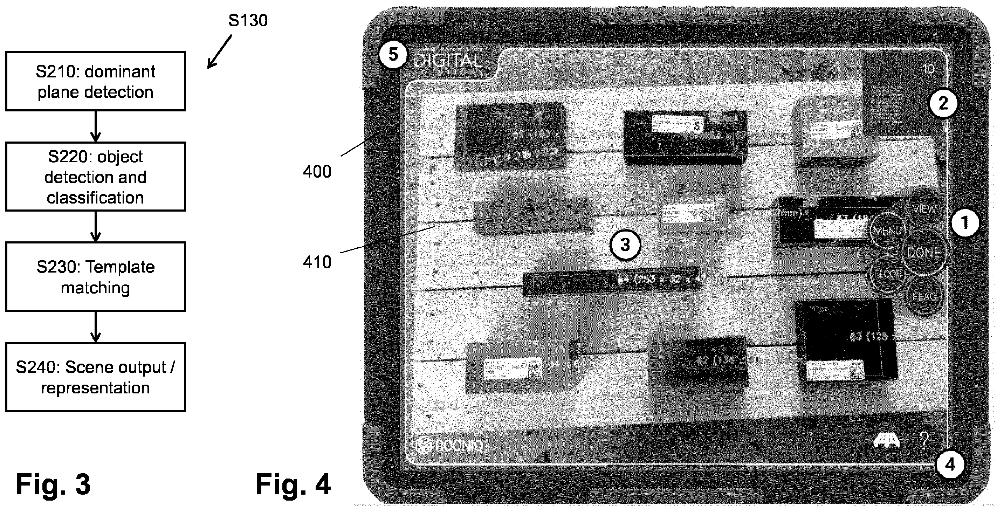

According to an exemplary implementation shown in Fig. 3, in the method 100 and device 200, the recognizing S130 of the object includes detecting S210 a dominant plane on which said object is located and detecting S220 of the one or more objects located on the dominant plane. In step S230, a template of said determined object is retrieved from a storage (internal or external) and matching is performed of the determined 3D model with the obtained template. The template is a 3D description of any kind as mentioned above, one example of which is CAD data. In step S240, the scene including the recognized objects may be output. The output may be into a file and/or by rendering on a display of the hand-held device.

The term "dominant plane" refers to a most prominent or visually significant planar surface within a scene or image. For example, it could be a floor, wall, table, or any other planar object that occupies a substantial portion of the scene and on which (or on the background of which) the recognized one or more objects are located. By identifying the dominant plane, algorithms can better understand a spatial layout of a scene. In augmented reality (AR) applications, detecting a dominant plane may help to place virtual objects accurately within the real-world environment. Detecting the dominant plane involves analyzing the depth image to identify regions that exhibit planar characteristics. Techniques such as edge detection, segmentation, or the like may be used to find and define the dominant plane. The dominant plane may be referred to as the "ground plane".

The recognizing S130 further includes estimating, based on the detected dominant plane, which pixels correspond to the object, and generating a foreground segmentation mask in step S210.

As an example, the step S210 may be performed as follows. The input to the dominant plane determination is a point cloud image based on the depth image and, possibly, camera characteristics (also referred to herein as camera intrinsics). Camera intrinsics are the internal characteristics of a camera that affect how it captures images. These parameters aid understanding and modeling the camera's behavior in computer vision tasks and may include one or more of focal length, principal point, skew coefficient, distortion coefficients, and/or further features.

After computing a point cloud image using the depth information and information regarding camera characteristics, the dominant plane is determined. The dominant plane may be detected to fit most points in the scene in a 3D space by a RANdom SAmpling Consensus, RANSAC, algorithm. Then, a local distance image is computed for each pixel in a point cloud image, as the maximum distance to any pixel in a predefined neighborhood. The predefined neighborhood may be, for instance a 3x3 pixel portion with the pixel for which the calculation is done in the middle. However, the 3x3 portion is only an example and in general, a 5x5 or a larger portion may be applied.

Then, a distance validity mask is computed, including thresholding the local distance image, the distance validity mask comprising edges separating foreground from a background. In other words, a threshold is set to distinguish whether a pixel in the local distance image belongs to the foreground or the background. Depending on the size of the predefined neighborhood a skilled person is capable of setting a suitable threshold for this distinction. Based thereon, a step of estimating an initial foreground mask is performed. The initial foreground mask includes points in the distance validity mask and is separated from the dominant plane by a predefined margin.

A next step of S210 is extracting image contours from the initial foreground mask, and projecting the image contours onto the dominant plane to obtain plane coordinate contours.

It is noted that step S210 may include additional filtering steps at its one or more stages described above. For example, step 210 may further comprise a step of removing plane contour self-intersections and/or one or more filtering or thresholding steps.

The step S220 of object detection and classification may include determining a 3D model of said object based on the depth information and the image. In this context, the 3D model includes size, shape, volume, and/or contour of the object. The determination of the 3D model may include representation of the object by a class based on object shape. This may be, for instance, classification to one of classes such as a cube, cuboid, cylinder, cone, or the like. However, the present disclosure is not limited to these abstract forms and may include forms defined based on the application, e.g. distinguish between a sheet (e.g. of material) and a bar (e.g. of material) or a pallet or the like even if all of these could fall under the abstract form of the cuboid.

The step S220 of determining the 3D model of said object may include application of at least one of REnder based Global Optimization (REGO), Structured REGO (STREGO), and Single View Transform Estimation (SVTE). These algorithms are described in more detail below.

The template matching S230 may comprise classifying the object. The classifying includes performing the matching for the determined 3D model with each of a plurality of templates associated with respective classes. The classifying further includes selecting among the classes a class that provides a best match among the classes.

The matching S230 the determined 3D model with the obtained 3D template may comprise application of Iterative Closest Edge (ICE) algorithm (described in more detail below).

It is noted that steps S220 and S230 may be performed together, so that the determination of the 3D model already takes into account the shapes of the available templates. The present disclosure is not limited to the specific methods of the 3D model determination and template matching.

The method 100, and specifically step S130 (steps S230 and/or S240) may further comprise a step of assessing conformity of said object with a predefined criteria, wherein the predefined criteria includes the amount of difference between the template and the 3D model.

Such assessment may be used to estimate accuracy of the matching (item classification) and may be displayed or stored together with the result of the recognition (identification, counting, and/or measuring) in step S240.

In addition or alternatively, such assessment may be used for example in determination of whether an identified item is damaged. For example, automated assessment of damage of cars may be performed in this way. The step of assessing conformity may be performed after the classification in step S230, or the classification is not necessary in case of recognizing only one class of object for anomaly detection. The problem of the assessment may be seen as classifying in step S320 the object as damaged or not damaged. Moreover, the conformity (amount of damage) may be determined based on the difference between the template and the recognized 3D model. The results

The method may further comprise 3D representation of the scene comprising said object, and rendering or storing the 3D reconstruction in step S240. An example has been provided in Fig. 4. The rendering or storing may include the result of the objects matched in the captured scene, i.e. denote the identified objects by labels (associated with the template of the best match) and/or by measured dimension(s) or the like.

Specifically, in some applications the rendering comprises displaying in which dimensions, contours, and/or labels associated with the object and/or vertices of contours of the object are displayed overlaid at a location of the object. In other words, the virtual annotation is overlaid on the currently captured camera image (e.g. preview image) or on the image captured for object detection.

The method 100 may be applied to recognize each of a plurality of objects in the captured scene and match them with the 3D template. In other words, the method 100 may be used to parse the scene in order to identify any occurrence of predefined items (i.e. objects for which template is available, e.g. pre-stored).

Such method may further comprise obtaining count of objects in said plurality of objects matching with the 3D template. The counting may be the overall counting of any items, or counting how many items of a specific kind are in the scene. Kind of the item may be defined by the respective template used for matching in step S230.

Moreover, a method for determining a number of objects (items) having a specific form may be provided. The specific form may be a sheet-like shape, the objects being stacked on the top of each other in one or more piles. The method uses the above method 100. The sheet-like shape may be typical for metal pieces in a storage. Alternatively or in addition, counting of rods or other cylindrical material pieces may be performed. Such objects may be stacked in a storage container or located on a pallet or the like. Alternatively or in addition items of raw material may be deposited in the form of bars (cuboid or a skewed cuboid) or the like. As described above, the method 100 is flexible and can work with any general shapes and specific templates.

Apart from (in addition or alternatively to) counting items of the same count or general items in the scene, the method 100 may be applied to determine (measure) dimensions and/or contours of each of a plurality of objects in said scene and matching them with the 3D template. The objects (items) may be for instance parcels, cargo vehicles, or baggage items or the like, depending on the specific application.

Alternatively or in addition, the method 100 may be applied to detecting object damages based on determining differences between the 3D model and the obtained 3D template, as already mentioned above.

It is noted that the functionality of the processing circuitry may be performed at least partially in a device extern to the hand-held device, such as a server or a cloud or the like. For this purpose, the processing circuitry is configured to provide data (e.g. the data obtained by the imaging and ranging sensor) to the external entity and receive the results of the object recognition from the external entity for rendering, e.g. on the display of the hand-held device.

### Exemplary implementation by way of a computer vision library

The CV pipeline may apply various algorithms to detect the ground plane and any items sitting on it. Detected items can then be measured by additional algorithms to refine the initial detection into a more accurate result. The output is a scene containing a collection of items that can then be used to visualize and record the measurements of each item by an application level code.

Some parts of the present disclosure may be implemented by way of a computer vision library. The library may also offer helper operations, such as persisting a frame (with the captured scene and/or recognized scene and possibly further related parameters) to a non-volatile storage (e.g. a disk), and/or storing frames in a volatile memory such that they can be accessed later, for example, for visualization after receiving the computer vision (CV) result for the given frame.

The library can be a cross-platform library that comprises modules including low level CV-related data types and functions that are used by higher level CV algorithms, and a CV pipeline management and execution layer. Such a library may be written in a universal programming language such as C++ to allow compilation for multiple platforms, including iOS, Android, Linux and macOS, such that it can run on any mobile devices as well as desktop machines or servers. The CV part performs computer vision tasks in both the 2D and 3D domains, using color images and depth data obtained from a host platform as described above, as well as intrinsic data describing the characteristics of the camera, transformed into a defined input format, and returns results in the form of scenes that contain zero or more items (objects).

The CV pipeline can be configured to run a variety of CV algorithms, depending on the requirements of the given task (for example, a quick estimate of item sizes, or a more accurate result). The pipeline can run synchronously or asynchronously, with the resulting scene provided to the calling code via a callback function.

When running on a mobile device, data is collected using platform-provided technology (such as ARKit for iOS and ARCore for Android, on compatible devices) and run through the CV pipeline. The CV pipeline may be run asynchronously to protect the main thread in mobile apps (of the hand-held device), allowing them to remain responsive to the user and operating system while the pipeline is running potentially long operations. When running on a desktop machine, or as a service on a server, input data is provided as a set of files that are loaded into memory and run through the CV pipeline.

In the following, an exemplary data flow is described. As an input, data is acquired using APIs provided by the underlying system and converted into a structure representing a CV frame (CVF) or provided as files previously created from such data. Helper functions may be provided for one or more operation systems, e.g. for iOS and Android apps to create a CVF from the platform-specific data capture API. For example, the platform-specific data capture API may include an API for capturing the image in step S120 and/or capturing the depth data in step S110.

In the data processing, the CVF is passed to a configured CV Pipeline, which owns the CV algorithm instances that form the CV pipeline. Alternatively, a set of files is provided, which can be loaded into a CVF. Each CV algorithm is passed the CVF in turn, along with the Scene output by the previous algorithm, if applicable. In the output processing (corresponding to step S240), when a CV algorithm completes operation, the CV Pipeline calls a client-provided callback function with the resulting Scene, allowing the client code to see the output of each stage of the CV pipeline. Scenes can be converted into a desired format such as a JSON string representation, which allows the result to be easily passed from the library to app code written in different languages (for example Swift on iOS or Kotlin on Android).

The Scene contains information about each Item found (i.e. object detected), such as its dimensions, its vertices in image space, and its 3D transform in camera space. This data can be used to visualize the result by, for example, for each item, drawing lines between image space vertices over a copy of the original color image, or by applying the camera space transform to a virtual entity of unit size to be displayed in an AR environment by combining it with the pose of the camera in world space when the frame data was captured by the system as is illustrated in Fig. 4. Fig. 4 shows a tablet 400 as a hand-held device with a tablet screen 410. As can be seen in Fig. 4, the scene is shown on the screen 410 with overlaid 3D bounding boxes marking the identified items (recognized objects). The items are counted / labeled by a number such as #1, #2, #3, etc. Moreover, determined (e.g. based on template matching) or measured dimensions are displayed as labels close to the items in parentheses. The components of the display are described below in more detail.

In the following, some specific exemplary functions of the CV library are described.

One of the functions is a Plane Based Depth Segmentation (PBDS) mentioned briefly above. The PBDS is a fast algorithm for finding structural elements and segmenting objects in a scene from depth data. The algorithm is based on finding the so-called dominant plane that fits most of the points in the scene, corresponding to step S210 above. The points that are estimated to belong to the plane are called plane inliers. The plane defines an upwards direction, referred to as the dominant plane normal (DPN). Usually this plane is the ground plane, or a table, or some other surface which other objects are placed on top of. Given the dominant plane, the algorithm estimates which pixels correspond to individual objects. This produces a mask which is referred to as the foreground (segmentation) mask.

The foreground mask can be computed using a hysteresis method inspired by the Canny edge detector, where two sets of points, one set which is "for sure foreground", and one which is "maybe foreground", are used to construct the final mask. Discontinuities in the depth image are used to distinguish the foreground from the background. The algorithm operates in both image coordinates and in plane coordinates, which can be converted forth and back using the camera intrinsics. The algorithm may perform some simple filtering in both image and plane space to remove obvious noise.

The inputs to the PBDS method are depth image and camera intrinsics. The outputs of the PBDS method are the dominant plane, the plane inliers, and the foreground segmentation mask. The PBDS method includes the following steps:
1. Compute a point cloud image using the depth image and the camera intrinsics. It is noted that this step is not necessary in case the point cloud is provided by another application (e.g. via an API or the like)
2. Find the dominant plane in the point cloud using the RANdom SAmpling Consensus (RANSAC) algorithm. It is noted that RANSAC is only an example, and other known algorithms may be used instead.
3. Compute a local distance image, defined for each pixel in the point cloud image as the maximum distance to any pixel in a 3x3 neighborhood.
4. Compute a distance validity mask by thresholding the local distance image. This mask defines edges which separates the foreground from the background.
5. Estimate an initial foreground mask. Points are in the foreground if they are both valid (as defined by the distance validity mask) and separated from the dominant plane by at least an upper margin along the Dominant Plane Normal (DPN). This gives a segmentation mask that is "for sure foreground" (belongs to a foreground with high probability).
6. Extract image contours from the foreground mask.
7. (Optionally) filter image contours based on contour area (unit: pixel^2) and re-compute foreground mask. In other words, noisy patches are pre-filtered in the image plane (hence the unit is pixel square).
8. Project contours onto the dominant plane (gives plane coordinate contours).
9. Extrude plane contours by a specified padding. This step is done in order to include the parts of the object below the upper margin but outside the plane contour.
10. Remove plane contour self intersections using "the snake algorithm" further described below. This step is beneficial since any point-polygon testing assumes contours that are not self-intersecting.
11. Optionally filter plane contours on area (meter^2) and length (meter). It is noted that before this step, the algorithm has extracted contours in the plane of potential foreground objects. Some of these contours may be very small, e.g. present merely due to noise (possible "speckles" in the depth image), or there can be irrelevant small objects scattered around the object of interest. These can be filtered away by for example a) If their area (square meters) falls below a specified threshold or b) Their circumference (meters) falls below a specified threshold.
12. Update foreground mask by including plane contour points that are above the dominant plane by at least a lower margin. This step includes the parts of the objects initially estimated as "for sure foreground" based on the upper margin, but now extended into "maybe foreground" area. Since objects are first extracted from a high confidence mask and then extended into a lower confidence mask, this is a sort of hysteresis. If the initial foreground was computed using the lower margin alone, a lot of noise may be captured and segmentation could fail. This step resembles how the Canny algorithm extends high confidence edges to edges with a lower signal strength.
13. Re-compute image contours based on updated foreground mask
14. (Optionally) re-filter image contours based on area (unit: pixel^2). This filtering can be performed after the hysteresis step where foreground contours have been extended and potentially split up into smaller contours due to contour overlap (fixed by "snake algorithm"). Thus, it may be useful even in presence of step 7).
15. (Optionally) filter contours intersecting the image border
16. (Optionally) extract the contour containing the image center pixel.

It is noted that this is only an exemplary detailed algorithm and that not all steps are necessarily performed or performed as described. For example, the refinement of the "for sure foreground" mask may be performed in a different way or not performed or the like. Where there is "Optionally" preceding a step, it means that the method as exemplified above may work with a sufficient quality even without these steps. However, it does not mean that the remaining steps are in general mandatory or have to be performed in the form exemplified above.

In the following, the Snakes algorithm mentioned above is briefly described. The Snakes algorithm is a method for removing self-intersection of a contour in two dimensions. It is called Snakes because a sub-contour is gradually built up along the main contour, and whenever the snake eats itself it breaks into two. An input to the algorithm is a contour C = [p1, p2, ..., pN] of length N and an output of the algorithm is a sequence of non-intersecting contours.

The **Snakes method** includes the following steps:
1. If length of C is less than 3 points, return it as is (trivial case).
2. Initialize the snake S = [p1, p2] to the first two points in the contour.
3. For each point q in C starting from p3, check if it intersects with the snake as follows
   3.1. Let s = last point in S,
   3.2. Let e1 = [s,q] be the current line segment candidate,
   3.3. For each pair of consecutive points e2 in the snake, do
      3.3.1. Unless the e1 intersects with e2, append q to snake and continue.
      3.3.2. Otherwise, e2 intersects with S and a split is performed as follows
      3.3.3. Compute the intersection point v between e1 and e2
      3.3.4. Emit a sub-snake S' constructed by added v to S
      3.3.5. Reinitialize S = [v,q]
      3.3.6. Continue from with next point q from C
4. Finally, if S is non-empty, emit (output) S.

Variations of the algorithm or using a different algorithm is possible and does not depart from the present disclosure.

In the following, algorithms for detecting the objects and identifying the items in order to understand the scene are described, corresponding to step S220 of Fig. 3 described above.

The **Render based Global Optimization (REGO)** is a global optimization algorithm that estimates transform parameters aligning a 3D mesh model against an arbitrary object in a depth image. Transform parameters can be divided into localization (translation, rotation) and measurement (scale, thickness, etc.) parameters. The algorithm is global in the sense that it can localize and measure an object anywhere in the scene, with the caveat that there is a tradeoff between computation cost and parameter bounds (i.e. prior information on the position, rotation and size of the object).

The algorithm operates by utilizing a render pipeline. For a specified model transform it produces an expected depth and normal image. The expected depth and normal images can be directly compared against the measured depth image obtained from sensors, and the computed normal image. The normal image is an image that has at each pixel a "surface normal" (a 3 component vector). This image is computed from the depth image and camera intrinsics and is not given by the sensor. The algorithm can also utilize depth discontinuities (i.e. depth edges), which usually coincide with the edges of the model mesh (i.e. the wireframe model).

The algorithm can be configured to estimate different sets of parameters depending on the geometry of the item of interest. For example:
- A cuboid has, in general, 9 parameters: 3 for scale, 3 for rotation and 3 for translation
- A cylinder has, in general, 8 parameters: 2 for inner and outer diameter, 1 for height, 2 for rotation (symmetry around one axis remove one degree of freedom), and 3 for translation
- A cone has, in general, 7 parameters: 1 for diameter, 1 for height, 2 for rotation, 3 for translation

These are only examples and further object classes (or shapes) have their corresponding known parameters that may be used in the present disclosure.

The REGO algorithm can be used together with structured scene information that further constrains the optimization problem. Using REGO in this way is referred to as **Structured REGO (STREGO).** For example, given a structured scene with a standard E-pallet on a factory floor with a cuboid on top, the cuboid can be localized and measured using REGO as follows:
1. Estimate the ground plane (separate algorithm). It is noted that a separate estimation is not necessary and that, in this step, the result of step S210 may be used.
2. Localize the pallet (5 parameters: 3 translation, pitch, yaw). Scale is known because the pallet is standardized, and the roll is known from the ground plane. If the user gives a hint of the pallet location by tapping the front end, there is only 1 translation parameter, reducing the total number of parameters to 3, making pallet localization fast.
   It is noted that the user input here is not required but may help to further constrain the recognition. For the purpose of obtaining the user input, the hand-held device may comprise the above mentioned user interface 270 such as a touch screen displaying the current scene and accepting a fingertip touch or a screen accepting input by a pen or mouse or another means for pointing or denoting objects on the screen or in the real world for the image sensor to capture and recognize.
3. Localize and measure the cuboid on top of the pallet (6 parameters: 2 translation parameters along on the surface of the pallet, yaw, width, length, height). The localized pallet gives bounds on the parameters of the cuboid.

The example of STREGO applied to an E-pallet on a factory floor is only an exemplary constraint for the REGO algorithm described above. In general, constraints may be defined for other scenarios such as detection of luggage at airports, packages in a storage room, or the like.

**Single View Transform Estimation (SVTE)** is a fast algorithm for estimating the transform of an object from depth data. A transform is relative to the camera (image sensor 210) and consists of three components:
1. Scale (3 parameters)
2. Rotation (3 parameters, angle axis representation)
3. Translation (3 parameters)

Given a depth image together with intrinsic camera parameters and a segmentation of the scene, the algorithm utilizes structural information in the scene and estimation priors in order to give the best possible solution. The algorithm may have assumptions (priors) on what kind of objects is to be find; for instance a cuboid or a rigid body of a known size, or any other constraint. The output of the algorithm is a set of transforms representing a box encompassing each object in the scene. The algorithm supports several variants of each step, which can be configured depending on the application.

The algorithm is fast because it efficiently optimizes rotation independently of scale and translation. The algorithm inputs include the depth image (obtained from the ranging sensor 220, or already in form of the point cloud), the camera intrinsics, the foreground segmentation mask obtained in step S210, the dominant plane obtained in step S210 above with a normal direction defining "upwards". This axis is referred to as the Dominant Plane Normal (DPN). The algorithm outputs include a set of estimated transforms, one for each contour in the segmentation mask.

The algorithm comprises the following steps:
1. Estimate initial parameters using PCA (Principal Component Analysis). This gives initial values for the scale, rotation and translation.
2. Estimate rotation using either of the following method
   a. None: Simply skip enhanced rotation estimation
   b. Normals: Rotate the object around the DPN. For each rotation, compute a normal matching score. Return the best rotation.
   c. Points: Rotate the object around the DPN. For each rotation, compute the area of the bounding box of the object projected onto the dominant plane. Return the box with a minimum area.
3. Estimate scale and a local shift (offset added on top of the existing translation parameter) using either of the following methods
   a. Bounding box. This is the minimum volume box encompassing every point of the object. Note that if the shift is not optimized, and the rotation is found by the point based method, this corresponds to just finding the height that completed the box from the area found in the previous step. However, in general, there is a shift from the origin found by PCA, and the projected area will not be the same as found in the rotation step.
   b. Best box. This is the best box according to a score function, described further below (see normal matching score and best box matching score below).
4. Optionally constraint the box to the dominant plane. The procedure up until this point does not guarantee that the transform makes the box align with the plane. Adding a strict prior that this must be the case tends to increase the performance of the algorithm.

With a **normal matching score** approach, given an axis and a set of normals, a match score can be computed. The score has to be non-linear, otherwise a rotation of the box around the DPN would not change the score. The score is computed as a mean of match scores between the axis and each normal. The axis-to-normal score is defined as through the normalized clamped angular difference (NCAD) between the vectors. For a given angular threshold, NCAD is locally linear in the angular difference, with a value of 0 for aligned vectors and a value of 1 for vectors separated by at least the angular threshold. Negating the difference and adding one gives a score which can be maximized. Note that the score is linear (up to the angular threshold), but this still makes it non-linear in terms of the vector components. The score function works well for objects with well defined faces that can be picked up by the depth sensor.

Given a set of points of an object, certain points might be outliers, that is, noisy points that do not belong to the actual object of interest. Estimating a bounding box to such a point cloud will result in non-optimal outcomes. The **best box score function** is a method to mitigate this problem. Given a candidate box, the point cloud is projected onto each axis defined by the object transform. For each axis, the projected points (now one-dimensional) are sorted in increasing order. Then, each pair of points defines a scale and shift. Optimizing a score function over all such pairs gives the best scale and shift for that axis. The score function is defined as a ratio between the percentage of points covered by and the length of the interval. The final 3-dimensional scale and offset is constructed through concatenating the results for each axis. Note that this algorithm has quadratic time complexity and only works well for reasonably fast processing hardware and not too high resolution depth images. For depth images with resolution on par with color images, such as those produced by disparity based imaging, the optimization over shift may be turned off to increase processing efficiency.

**Iterative Closest Edge (ICE)** is a local optimization algorithm estimating transformation parameters that aligns a 3D wireframe model against an object in a color image. The algorithm operates in the image plane, and given the right conditions it can give pixel perfect alignment. The transformation parameters depends on the geometry of the model, for example those as mentioned above:
- A cuboid have, in general, 9 parameters: 3 for scale, 3 for rotation and 3 for translation
- A cylinder have, in general, 8 parameters: 2 for inner and outer diameter, 1 for height, 2 for rotation (symmetry around one axis remove one degree of freedom), and 3 for translation
- A cone have, in general, 7 parameters: 1 for diameter, 1 for height, 2 for rotation, 3 for translation
- other shapes.

In addition, any prior knowledge about the scene can further reduce the number of free parameters. For example, if an object is known to lie on a flat surface such as the ground or a pallet, there is only 1 free rotation parameter (the yaw) left to estimate, the other two (pitch, roll) are given from the prior knowledge. ICE is a generic algorithm that can optimize any set of transformation parameters as described above.

The inputs to the ICE include the initial model transform estimate. ICE is a local method, which means that the input needs to be estimated through other means. For instance, the input may be result of the step S220. The inputs to the ICE include the camera model. This is usually given by the target platform such as Apple SDK on iOS.

A camera model is a function defining how a 3D point (in front of the camera) maps to a 2D point in the image plane (i.e. a pixel). There are many camera models, both parametric and non-parametric. In computer vision usage of a so called "pinhole camera model" may be desirable. It is a mathematically idealized camera model. In reality, camera models are typically non-linear, possibly including some distortion effects etc. Parametric camera models have a finite (usually small) set of parameters (usually coefficients for some polynomial or rational function) that describe how an image is distorted relative to an image obtained with a pinhole camera model.

In non-parametric models pixels are corrected for distortion by a look up table. After correcting the image distortion based on "pinhole camera model", an image "as if produced by a pinhole camera" is obtained. The pinhole camera model can be described by 8 parameters, belonging to the "camera intrinsics" mentioned above (assuming a distortion free image from the underlying sensor). The 8 parameters include things like focal length, principal point (2 parameters, one in X and one in Y direction), sensor tilt and skew, and the like.

However, it is noted that the ICE can be also input the original distorted image, together with information about which camera model to apply (with camera intrinsics attached).

The algorithm includes the following steps:
1. Transformation: The model is transformed using the input transform, and projected through the camera model, producing a 2D model wireframe.
2. Feature extraction: Edge features are extracted in the color image, providing both edge strength information and edge orientation. Typically, object edges tend to have a sharp contrast against the background. Without enough edge information, ICE may not give good results.
3. Matching: Points on the 2D model wireframe are matched against points in the edge image based on edge strength and orientation. For every point on the model wireframe, a set of potential matches are found in the edge image, and vice versa.
4. Assignment: Given match candidates, the best correspondence set is found by solving the assignment problem, i.e. finding the correspondence set that gives the overall best match score between model and edge image points.
5. Differentiation: For every model/image point correspondence, a residual is calculated (i.e. the difference in pixels). For a perfectly aligned model, the residual is zero. The residuals are differentiated using automatic differentiation with respect to the model transform parameters. In other words, this computes the sensitivity of the discrepancy between the transformed and projected model points and the corresponding points in the color edge image. The more sensitive the discrepancy is with respect to some parameter, the more that parameter should be changed.
6. Optimization: The gradient information obtained from differentiation is plugged into a generic optimizer which finds the best local minima to the cost as defined by the residuals.
7. Termination: Repeat until convergence with input transform replaced with the optimized one.

The outputs of the ICE are the optimized model transform parameters.

It is noted that ICE is only exemplary and that other approaches or modifications of the ICE may be applied to refine the scene understanding.

In summary, the present disclosure provides an edge and/or cloud computer-implemented method for identifying, measuring, and comparing objects in a three-dimensional environment using depth data obtained from consumer mobile devices.

### The method comprises

1. receiving depth data and image data from a mobile device sensor capable of capturing 3D spatial information of an object, corresponding to steps S110 and S120.
2. processing the depth data to identify objects in the real world by recognizing their shape, size, and contours corresponding step S130 and in particular steps S210 and S220.
3. calculating the dimensions and volume of the identified objects based on the depth data, corresponding to step S220;
4. comparing the measured dimensions and volume of the identified objects to stored reference data to classify the objects and assess their conformity to predefined criteria, corresponding to step S230; and
5. generating a report or output displaying the identified, measured, and compared objects, allowing for real-time decision-making or further processing, corresponding to step S240.

As mentioned above, the integration of a peripheral higher-resolution LiDAR, whether statically mounted or mobile, into the system offers significant benefits by enhancing the precision and depth of 3D data available to the software. Such 3rd party hardware allows for more detailed and reliable measurements. In a static setup, such as a fixed mount in a warehouse or inspection station, it can continuously capture comprehensive data of objects passing through, ensuring high-throughput accuracy in parcel or cargo measurement. A mobile LiDAR solution adds versatility by enabling on-the-go scanning in dynamic environments, such as for logistics optimization or damage assessment in hard-to-reach areas. This results in faster, more accurate assessments, improved real-time decision-making, and reduced manual intervention, ultimately increasing the system's overall efficiency and reliability.

### Use Cases and Applications

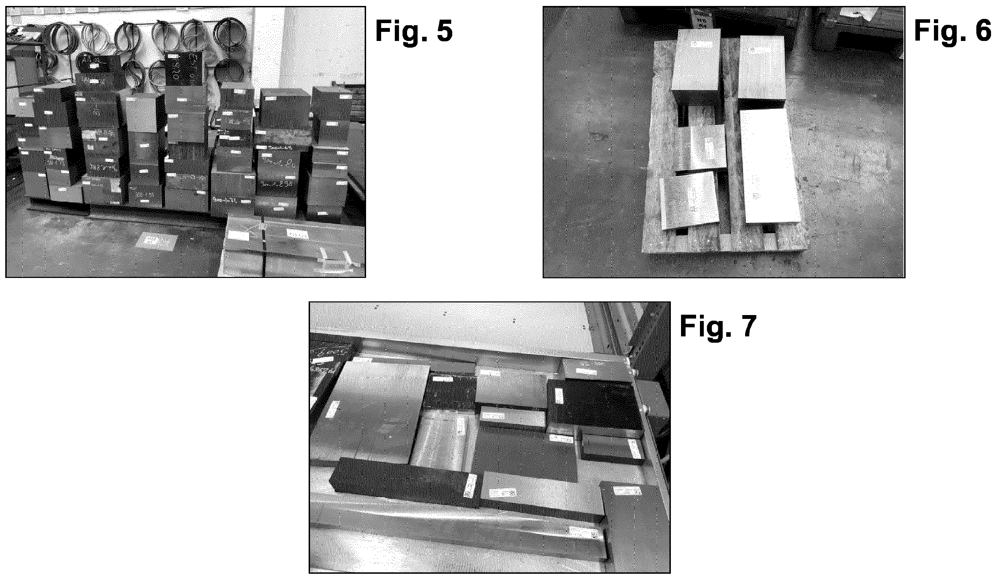

One exemplary use case concerns industrial application of raw material storage monitoring. For instance, as steel companies move towards Industry 4.0 and full digitization, one area which has been thus far neglected is the goods-in or raw material stage. In this use case, high value billets are cut from larger raw materials according to the customers requirements. The remaining material is given a theoretical size in the Enterprise Resource Planning (ERP) system based on an assumption of the raw materials original size, minus the dimensions of the ordered and removed material plus a scrap estimation. At some future stage in time, having had multiple customer orders removed, the material becomes relatively small, yet still very valuable. Sizes between shoe box to pasta box are stored in stacks (as shown in Fig. 5), on pallets (as shown in Fig. 6), or in vertical storage systems (drawers as shown in Fig. 7). After multiple milling or sawing actions, which incur loss through waste, the assumed ERP dimensions can become inaccurate.

Some further use cases are in parcel measurement, logistics, and air travel baggage. Here, digital technology streamlines and automates the process of assessing the dimensions of packages and luggage. For parcel measurement, the software can capture the size and shape of parcels, ensuring correct pricing and efficient space allocation in transport vehicles. In logistics, it enables fast, precise volume assessments of packages to optimize packing and storage, improving supply chain efficiency and reducing shipping errors. For air travel, the technology instantly measures and verifies baggage dimensions against airline size limits, preventing errors in manual measurement and ensuring compliance with baggage policies, thereby enhancing customer experience and reducing operational delays.

In car damage assessment for insurance claims, the technology automates the evaluation process by using depth and image data to accurately identify and measure the extent of vehicle damage. This eliminates the need for costly 3rd party manual inspections. By capturing precise 3D data of the damaged areas, the software can assess the severity of the damage by comparing the current state of the vehicle to its original condition. This accelerates the claims process, ensures more consistent and objective evaluations, and reduces potential disputes between insurers and claimants, ultimately leading to faster resolution and improved customer satisfaction.

### User Interface (UI) and User Experience (UX)

The interface is designed for the full screen to be used for both the Augmented Reality live-view and static screens. The app is designed to be used in landscape mode, with the user holding the device with both hands, the right hand having its thumb extended onto the screen area for use in interactive gestures.

The screen 410 of the hand-held exemplary device 400 contains five main user interface elements shown in Fig. 4 (denoted by numbers in a circle in the figure):
1. An ergonomic button panel containing five contextual circular buttons within easy reach of the thumb. These buttons are shown as virtual buttons on screen but they could (one or more of them or all of them) be hardware buttons.
   a. the primary DONE action button triggers an operation
   b. the VIEW button switches between static and AR view mode
   c. the MENU button provides access to the apps main menu
   d. the FLOOR / PALLET toggles between operating on a planar surface such as the floor and operating on a pallet.
   e. the FLAG button allows the users to save the operation to disk for later analysis
2. The data output window provides the user with a count of the objects and the individual length, width and height of each dimension.
3. The main window (displayed on the screen 410), switchable between live-view and static view provides contextual information to the user. It is showing three dimensional object bounding boxes and associated dimensions for the recognized (identified) items.
4. Help and assist icons providing visual example guidance on how to best use the app.
5. The branding frame allows different departments, or companies to white-label the software as their own.

It is noted that these components are exemplary. For example, while components 4 and 5 may be practically useful, they are not strictly necessary for an ergonomic operation for the device. The rendering of the main window, the button panel and the data output may differ from this example. Moreover, the data output window may not be necessary if the measured data are displayed as labels close to the identified items. On the other hand, the measured data do not need to be displayed as labels close to the identified items if there is an output window that associates the item label with the further measured data.

The above examples are not to limit the present disclosure. There are many modifications and configurations, which may be used in addition or alternatively. This present disclosure can be used in any kind of device that is receiving signals over a wireless channel. The embodiments and exemplary implementations mentioned above show some non-limiting examples. It is understood that various modifications may be made without departing from the claimed subject matter. For example, modifications may be made to adapt the examples to new systems and scenarios without departing from the central concept described herein.

### Selected embodiments and examples

Summarizing, embodiments of the present disclosure relates to object recognition, which may be applied in identifying, measuring, and/or counting items.

According to a first aspect, a method is provided for object recognition, the method comprising: measuring, with a ranging sensor of a hand-held device, depth information of a scene comprising an object; capturing, with an image sensor of the hand-held device, an image of the scene comprising the object; and recognizing the object within the scene, wherein the recognizing includes matching the depth information and the image with a three-dimensional, 3D, template of said object.

According to a second aspect, further to the first aspect, the recognizing of the object includes: detecting a dominant plane on which said object is located; estimating, based on the detected dominant plane, which pixels correspond to the object; and generating a foreground segmentation mask.

According to a third aspect, further to the second aspect, the method further comprises computing a local distance image, for each pixel in a point cloud image, as the maximum distance to any pixel in a predefined neighborhood; computing a distance validity mask including thresholding the local distance image, the distance validity mask comprising edges separating foreground from a background; estimating an initial foreground mask including points in the distance validity mask and separated from the dominant plane by a predefined margin; extracting image contours from the initial foreground mask; and projecting the image contours onto the dominant plane to obtain plane coordinate contours.

According to a fourth aspect, further to the third aspect, the method further comprises a step of removing plane contour self-intersections and one or more filtering or thresholding steps.

According to a fifth aspect, further to any of the second to fourth aspect, the recognizing comprises: detecting of objects including said object located on the dominant plane; determining a 3D model of said object based on the depth information and the image, the 3D model including size, shape, volume, and/or contour of the object; obtaining a template of said object from a storage; and matching the determined 3D model with the obtained template.

According to a sixth aspect, further to the fifth aspect, the step of determining the 3D model of said object includes application of at least one of REnder based Global Optimization (REGO), Structured REGO (STREGO), and Single View Transform Estimation (SVTE); and matching the determined 3D model with the obtained 3D template comprises application of Iterative Closest Edge (ICE) algorithm.

According to a seventh aspect, further to any of the first to sixth aspect, the method further comprises classifying the object comprising: performing the matching for the determined 3D model with each of a plurality of templates associated with respective classes including said template; and selecting among the classes a class that provides a best match among the classes.

According to an eighth aspect, further to the first aspect, further to any of the first to seventh aspect the method further comprises assessing conformity of said object with a predefined criteria, wherein the predefined criteria includes the amount of difference between the template and the 3D model.

According to a ninth aspect, further to the first aspect, further to any of the first to eighth aspect the method further comprises a generating 3D representation of the scene comprising said object, and rendering or storing the 3D representation.

According to a tenth aspect, further to the ninth aspect, the rendering comprises displaying in which dimensions, contours, and/or labels associated with the object and/or vertices of contours of the object are displayed overlaid at a location of the object.

According to an eleventh aspect, further to any of the second to ninth aspect, the detecting of the dominant plane includes: computing a point cloud image using the depth information and information regarding camera characteristics; and detecting the dominant plane to fit most points in the scene in a 3D space RANdom SAmpling Consensus, RANSAC, algorithm.

According to a twelfth aspect, further to any of the first to eleventh aspect, the method is applied to recognize each of a plurality of objects in said scene and matching them with the 3D template, the method further comprising obtaining count of objects in said plurality of objects matching with the 3D template.

According to a 13-th aspect, a method is provided for determining a number of objects having a sheet-like shape, the objects being stacked on the top of each other in one or more piles, wherein the method comprises the method of the twelfth aspect.

According to a 14-th aspect, further to further to any of the first to eleventh aspect, the method is applied to determining dimensions and/or contours of each of a plurality of objects in said scene and matching them with the 3D template, the objects being parcels, cargo vehicles, or baggage items; or to detecting object damages based on determining differences between the 3D model and the obtained 3D template.

According to a 15-th aspect, a hand-held device is provided for object recognition, the hand-held device comprising: a ranging sensor for measuring depth information of a scene comprising an object; an image sensor for capturing an image of the scene comprising the object; and processing circuitry configured to recognize the object within the scene, wherein the recognition includes matching the depth information and the image with a three-dimensional, 3D, template of said object.

The hand-held device may implement additional features of any of the first to fourteenth aspect mentioned above. Specifically, the processing circuitry of the hand-held device may implement additional features of any of the first to fourteenth aspect mentioned above.

The processing circuitry may be provided as an integrated circuit with inputs/outputs connectable to the respective sensors or with input/output connectable to a device providing the data measured/captured by the image and/or ranging sensor.

Moreover, a computer program stored on a non-transitory medium is provided that comprises code instructions which when executed on one or more processors cause the one or more processors to execute the method of any of the first to 14-th aspect.

## Claims

1. A method for object recognition, comprising:
measuring, with a ranging sensor of a hand-held device, depth information of a scene comprising an object,
capturing, with an image sensor of the hand-held device, an image of the scene comprising the object, and
recognizing the object within the scene, wherein the recognizing includes matching the depth information and the image with a three-dimensional, 3D, template of said object.

2. The method according to claim 1, wherein the recognizing of the object includes:
detecting a dominant plane on which said object is located,
estimating, based on the detected dominant plane, which pixels correspond to the object, and
generating a foreground segmentation mask.

3. The method according to claim 2, comprising:
computing a local distance image, for each pixel in a point cloud image, as the maximum distance to any pixel in a predefined neighborhood,
computing a distance validity mask including thresholding the local distance image, the distance validity mask comprising edges separating foreground from a background,
estimating an initial foreground mask including points in the distance validity mask and separated from the dominant plane by a predefined margin,
extracting image contours from the initial foreground mask, and
projecting the image contours onto the dominant plane to obtain plane coordinate contours.

4. The method according to claim 3, further comprising a step of removing plane contour self intersections and one or more filtering or thresholding steps.

5. The method of any of claims 2 to 4, wherein the recognizing comprises:
detecting of objects including said object located on the dominant plane,
determining a 3D model of said object based on the depth information and the image, the 3D model including size, shape, volume, and/or contour of the object,
obtaining a template of said object from a storage, and
matching the determined 3D model with the obtained template.

6. The method according to claim 5, wherein
the step of determining the 3D model of said object includes application of at least one of REnder based Global Optimization (REGO), Structured REGO (STREGO), and Single View Transform Estimation (SVTE), and
matching the determined 3D model with the obtained 3D template comprises application of Iterative Closest Edge (ICE) algorithm.

7. The method of any of claims 1 to 6, further comprising classifying the object comprising:
performing the matching for the determined 3D model with each of a plurality of templates associated with respective classes including said template,
selecting among the classes a class that provides a best match among the classes.

8. The method of any of claims 1 to 7, further comprising assessing conformity of said object with a predefined criteria, wherein the predefined criteria includes the amount of difference between the template and the 3D model.

9. The method according to any of claims 1 to 8, further comprising 3D representation of the scene comprising said object, and rendering or storing the 3D reconstruction.

10. The method according to claim 9, wherein the rendering comprises displaying in which dimensions, contours, and/or labels associated with the object and/or vertices of contours of the object are displayed overlaid at a location of the object.

11. The method according to any of claims 2 to 9, wherein the detecting of the dominant plane includes:
computing a point cloud image using the depth information and information regarding camera characteristics, and
detecting the dominant plane to fit most points in the scene in a 3D space RANdom SAmpling Consensus, RANSAC, algorithm.

12. The method according to any of claims 1 to 11, applied to recognize each of a plurality of objects in said scene and matching them with the 3D template, the method further comprising:
obtaining count of objects in said plurality of objects matching with the 3D template.

13. A method for determining a number of objects having a sheet-like shape, the objects being stacked on the top of each other in one or more piles, wherein the method comprises the method of claim 12.

14. The method according to any of claims 1 to 11, applied to
determine dimensions and/or contours of each of a plurality of objects in said scene and matching them with the 3D template, the objects being parcels, cargo vehicles, or baggage items; or
detecting object damages based on determining differences between the 3D model and the obtained 3D template.

15. A hand-held device for object recognition, comprising:
a ranging sensor for measuring depth information of a scene comprising an object,
an image sensor for capturing an image of the scene comprising the object, and
processing circuitry configured to recognize the object within the scene, wherein the recognition includes matching the depth information and the image with a three-dimensional, 3D, template of said object.
